# EUROPÄISCHE PATENTSCHRIFT

(11) **EP 2 752 060 B1**
(45) Veröffentlichungstag und Bekanntmachung des Hinweises auf die Patenterteilung: **11.03.2020**
(21) Anmeldenummer: 12755838.5
(22) Anmeldetag: 30.08.2012
(51) Int. Cl.: H04W 56/00

(54) **KONZEPT ZUR BIDIREKTIONALEN DATENÜBERTRAGUNG ZWISCHEN EINER BASISSTATION UND EINEM KNOTEN**
CONCEPT FOR BIDIRECTIONAL DATA TRANSMISSION BETWEEN A BASE STATION AND A NODE
CONCEPT POUR LA TRANSMISSION BIDIRECTIONNELLE DE DONNÉES ENTRE UNE STATION DE BASE ET UN NOEUD

(30) Priorität: 02.09.2011 DE 102011082100
(43) Veröffentlichungstag der Anmeldung: 09.07.2014
(60) Teilanmeldung: 20153307.2
(73) Patentinhaber: Fraunhofer Gesellschaft zur Förderung der angewandten Forschung E.V., 80686 München (DE)
(72) Erfinder: BERNHARD, Josef, 92507 Nabburg (DE); KILIAN, Gerd, 91056 Erlangen (DE)
(74) Vertreter: Hersina, Günter
(86) Internationale Anmeldenummer: PCT/EP2012/066908
(87) Internationale Veröffentlichungsnummer: WO 2013/030304

(56) Entgegenhaltungen:
- US-A1- 2006 072 586
- US-A1- 2007 159 321
- RONALD A ILTIS ET AL: "GEN05-4: Carrier Offset and Channel Estimation for Cooperative MIMO Sensor Networks", GLOBAL TELECOMMUNICATIONS CONFERENCE, 2006. GLOBECOM '06. IEEE, IEEE, PI, 1. November 2006 (2006-11-01), Seiten 1-5, XP031075172, ISBN: 978-1-4244-0356-1
- QUALCOMM EUROPE: "Synchronization Requirements and Techniques", 3GPP DRAFT; R4-091336, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Nr. Seoul, Korea; 20090319, 19. März 2009 (2009-03-19), XP050342103, [gefunden am 2009-03-19]
- MITSUBISHI ELECTRIC: "CoMP in heterogeneous network deployment", 3GPP DRAFT; R3-092539(COMP_FOR_HETNET), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Nr. Miyazaki; 20091012, 12. Oktober 2009 (2009-10-12), XP050392036, [gefunden am 2009-10-03]
- SIMEONE O ET AL: "Distributed synchronization in wireless networks", IEEE SIGNAL PROCESSING MAGAZINE, IEEE SERVICE CENTER, PISCATAWAY, NJ, US, Bd. 25, Nr. 5, 1. September 2008 (2008-09-01), Seiten 81-97, XP011233605, ISSN: 1053-5888, DOI: 10.1109/MSP.2008.926661
- ERIK DAHLMANN ET AL: "3GEvolution: HSPA and LTE for Mobile Broadband, passage", 1. Juni 2008 (2008-06-01), 3G EVOLUTION : HSPA AND LTE FOR MOBILE BROADBAND, ACADEMIC PRESS IN ELSEVIER, NL, PAGE(S) 490 - 495, XP002591334, ISBN: 978-0-12-374538-5 Absatz [19.5]; Abbildungen 19.19,19.20
- LG ELECTRONICS: "Considerations on interference coordination in heterogeneous networks", 3GPP DRAFT; R1-101369 INTERFERENCE COORDINATION IN HETNET V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Bd. RAN WG1, Nr. San Francisco, USA; 20100222, 16. Februar 2010 (2010-02-16), XP050418854, [gefunden am 2010-02-16]

## Beschreibung

Ausführungsbeispiele der vorliegenden Erfindung beziehen sich auf ein Konzept zur bidirektionalen Datenübertragung zwischen einer Basisstation und einem Knoten. Weitere Ausführungsbeispiele der vorliegenden Erfindung beziehen sich auf eine Basisstation mit bidirektionaler Datenübertragung zu einem Knoten. Weitere Ausführungsbeispiele der vorliegenden Erfindung beziehen sich auf ein optimiertes bidirektionales Basisstation-Knoten Telemetriesystem.

Bei der Übertragung von kleinen Datenmengen von einer großen Anzahl von Knoten zu einer Basisstation, z. B. von Sensordaten von Heizungs-, Strom- oder Wasserzählern, sowie bei der Übertragung von Steuerinformation von der Basisstation zu den Knoten, wie z. B. das Ein-/Ausschalten von Geräten, kann ein Funkübertragungssystem zum Einsatz kommen. Die Basisstation empfängt und steuert dabei eine große Anzahl von Knoten.

Es gibt bereits verschiedene unidirektionale und bidirektionale Systeme für die Übertragung von Daten zwischen Basisstation und Knoten. Bekannte Systeme sind z. B. DECT (DECT= Digital Enhanced Cordless Telecommunications, dt. digitale, verbesserte schnurlose Telekommunikation) und RFID (RFID= Radio Frequency Identification, dt. Identifizierung mit Hilfe elektromagnetischer Wellen). Typisch an diesen Systemen ist, dass die Basisstation eine Referenzfrequenz und eine Referenzzeit vorgibt, auf die sich die Knoten synchronisieren. Beispielsweise gibt bei RFID Systemen eine Lesegerät (Basisstation) ein Zeitfenster vor, das unmittelbar nach seiner Aussendung folgt, innerhalb dessen sich die RFID Transponder (Knoten) zufällig einen Zeitpunkt für die Rückantwort aussuchen. Das vorgegebene Zeitintervall ist zudem in Zeitschlitze gleicher Länge unterteilt. Man spricht hier von einem slotted ALOHA (dt. unterteiltes ALOHA) Protokoll. Bei DECT wiederum sind Zeitschlitze innerhalb eines fest vorgegebenen Rasters vorgesehen. Die Basisstation ordnet hier einem Teilnehmer einen exakten Zeitschlitz zu, den er für die Kommunikation verwenden darf. Aufgrund der Ungenauigkeit durch die Quarztoleranz ist zwischen den Zeitschlitzen eine Pufferzeit vorgesehen, damit sich die Datenpakete nicht überlagern.

In der Veröffentlichung [ERIK DAHLMANN ET AL: "3GEvolution: HSPA and LTE for Mobile Broadband, passage", 1. Juni 2008 (2008-06-01), 3G EVOLUTION: HSPA AND LTE FOR MOBILE BROADBAND, ACADEMIC PRESS IN ELSEVIER, NL, PAGE(S) 490 - 495; XP002591334) wird das sog. Uplink Timing Alignment in LTE beschrieben.

Der vorliegenden Erfindung liegt die Aufgabe zugrunde, ein Konzept zu schaffen, welches eine Erhöhung der Reichweite und/oder der Datenübertragungsrate bzw. Kanalkapazität (Anzahl der Teilnehmer) ermöglicht.

Diese Aufgabe wird durch die unabhängigen Patentansprüche gelöst.

Vorteilhafte Weiterbildungen finden sich in den abhängigen Patentansprüchen.

Ausführungsbeispiele der vorliegenden Erfindung schaffen eine Basisstation mit bidirektionaler Datenübertragung zu einem Knoten. Die Basisstation weist eine Einrichtung zum Empfangen eines von dem Knoten mit einer Knoten-Sendefrequenz gesendeten Datenpakets auf, wobei die Knoten-Sendefrequenz von einem Frequenzgeber des Knotens abgeleitet ist. Ferner weist die Basisstation eine Einrichtung zum Ermitteln der Knoten-Sendefrequenz basierend auf dem empfangenen Datenpaket und zum Ermitteln einer Abweichung des Frequenzgebers des Knotens basierend auf einer Frequenzabweichung zwischen der ermittelten Knoten-Sendefrequenz und einer dem Knoten zugeordneten Soll-Knoten-Sendefrequenz auf. Des Weiteren weist die Basisstation eine Einrichtung zum Senden eines Datenpakets zu dem Knoten mit einer Basisstation-Sendefrequenz auf, wobei die Einrichtung zum Senden des Datenpakets ausgebildet ist, um die Basisstation-Sendefrequenz basierend auf der ermittelten Abweichung des Frequenzgebers des Knotens einzustellen.

Bei Ausführungsbeispielen wird die Abweichung des Frequenzgebers des Knotens von der Basisstation basierend auf der Frequenzabweichung zwischen der ermittelten Knotensendefrequenz und der dem Knoten zugeordneten Soll-Knoten-Sendefrequenz ermittelt und die Basisstation-Sendefrequenz basierend auf der ermittelten Abweichung des Frequenzgebers des Knotens eingestellt, z. B. derart dass die Basisstation-Sendefrequenz an eine Knoten-Empfangsfrequenz, die ebenfalls von dem Frequenzgeber des Knotens abgeleitet ist, angepasst ist.

Weitere Ausführungsbeispiele der vorliegenden Erfindung schaffen eine Basisstation mit bidirektionaler Datenübertragung zu einem Knoten. Die Basisstation weist eine Einrichtung zum Empfangen eines von dem Knoten mit einer Knoten-Sendefrequenz gesendeten Datenpakets auf, wobei die Knoten-Sendefrequenz von einem Frequenzgeber des Knotens abgeleitet ist. Ferner weist die Basisstation eine Einrichtung zum Ermitteln der Knoten-Sendefrequenz basierend auf dem empfangenen Datenpaket und zum Ermitteln einer Abweichung des Frequenzgebers des Knotens basierend auf einer Frequenzabweichung zwischen der ermittelten Knoten-Sendefrequenz und einer dem Knoten zugeordneten Soll-Knoten-Sendefrequenz auf. Des Weiteren weist die Basisstation eine Einrichtung zum Senden eines Datenpakets zu dem Knoten auf, wobei das Datenpaket die ermittelte Abweichung des Frequenzgebers des Knotens oder einen davon abgeleiteten Korrekturwert aufweist.

Bei Ausführungsbeispielen wird die Abweichung des Frequenzgebers des Knotens von der Basisstation basierend auf der Frequenzabweichung zwischen der ermittelten Knoten-Sendefrequenz und der dem Knoten zugeordneten Soll-Knoten-Sendefrequenz ermittelt und die ermittelte Abweichung des Frequenzgebers des Knotens oder ein davon abgeleiteter Korrekturwert in dem Datenpaket zu dem Knoten übertragen.

Weitere Ausführungsbeispiele der vorliegenden Erfindung schaffen eine Basisstation mit bidirektionaler Datenübertragung zu einem Knoten. Die Basisstation weist eine Einrichtung zum Empfangen eines von dem Knoten zu einem Knoten-Sendezeitpunkt gesendetes Datenpaket auf, wobei der Knoten-Sendezeitpunkt von einem Zeitgeber des Knotens abgeleitet ist. Ferner weist die Basisstation eine Einrichtung zum Ermitteln des Knoten-Sendezeitpunktes basierend auf dem empfangenen Datenpaket und zum Ermitteln einer Zeitabweichung des Zeitgebers des Knotens basierend auf einer Zeitabweichung zwischen dem ermittelten Knoten-Sendezeitpunkt und einem dem Knoten zugeordneten Soll-Knoten-Sendezeitpunkt auf. Des Weiteren weist die Basisstation eine Einrichtung zum Senden eines Datenpakets zu dem Knoten auf, wobei das Datenpaket die ermittelte Zeitabweichung des Zeitgebers des Knotens oder einen davon abgeleiteten Korrekturwert aufweist.

Bei Ausführungsbeispielen wird die Abweichung des Zeitgebers des Knotens von der Basisstation basierend auf der Zeitabweichung zwischen dem ermittelten Knotençkkh-Sendezeitpunkt und dem, dem Knoten zugeordneten Soll-Knoten-Sendezeitpunkt ermittelt und die ermittelte Abweichung des Zeitgebers des Knotens oder ein davon abgeleiteter Korrekturwert in dem Datenpaket zu dem Knoten übertragen.

Ausführungsbeispiele der vorliegenden Erfindung werden nachfolgend unter Bezugnahme auf die beiliegende Zeichnung näher erläutert. Es zeigen:
- Fig. 1: ein Blockschaltbild einer Basisstation mit bidirektionaler Datenübertragung zu einem Knoten gemäß einem Ausführungsbeispiel der vorliegenden Erfindung;
- Fig. 2: ein Blockschaltbild eines Systems zur bidirektionalen Datenübertragung gemäß einem Ausführungsbeispiel der vorliegenden Erfindung;
- Fig. 3: ein Blockschaltbild eines herkömmlichen Knotens;
- Fig. 4: ein Blockdiagramm einer Basisstation mit bidirektionaler Datenübertragung zu einem Knoten gemäß einem weiteren Ausführungsbeispiel der vorliegenden Erfindung;
- Fig. 5: ein Blockschaltbild eines Systems mit bidirektionaler Datenübertragung gemäß einem weiteren Ausführungsbeispiel der vorliegenden Erfindung;
- Fig. 6: ein Diagramm einer Auslastung eines Kommunikationskanals eines FDMA Systems über die Zeit, wobei die Ordinate die Frequenz und die Abszisse die Zeit beschreibt;
- Fig. 7: ein Diagramm einer Frequenzabweichung einer Knoten-Sendefrequenz von der Mittenfrequenz eines Kanals, wobei die Ordinate die Frequenz und die Abszisse die Zeit beschreibt;
- Fig. 8: ein Blockdiagramm einer Basisstation mit bidirektionaler Datenübertragung zu einem Knoten gemäß einem weiteren Ausführungsbeispiel der vorliegenden Erfindung;
- Fig. 9: ein Blockschaltbild eines Systems mit bidirektionaler Datenübertragung gemäß einem weiteren Ausführungsbeispiel der vorliegenden Erfindung;
- Fig. 10: ein Diagramm einer Auslastung eines Kommunikationskanals eines TDMA Systems über die Zeit, wobei die Ordinate die Frequenz und die Abszisse die Zeit beschreibt; und
- Fig. 11: ein Diagramm einer Auslastung eines Kommunikationskanals beim Koordinationsverfahren gemäß einem Ausführungsbeispiel der vorliegenden Erfindung, wobei die Ordinate die Frequenz und die Abszisse die Zeit beschreibt.

In der nachfolgenden Beschreibung der Ausführungsbeispiele der Erfindung werden in den Figuren gleiche oder gleichwirkende Elemente mit dem gleichen Bezugszeichen versehen, so dass deren Beschreibung in den unterschiedlichen Ausführungsbeispielen untereinander austauschbar ist.

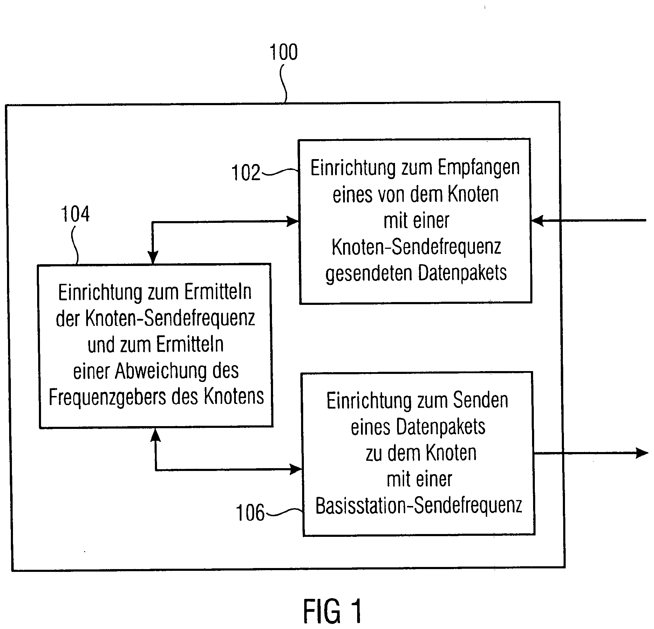

Fig. 1 zeigt ein Blockschaltbild einer Basisstation 100 mit bidirektionaler Datenübertragung zu einem Knoten gemäß einem Ausführungsbeispiel der vorliegenden Erfindung. Die Basisstation 100 weist eine Einrichtung 102 zum Empfangen eines von dem Knoten mit einer Knoten-Sendefrequenz gesendeten Datenpakets auf, wobei die Knoten-Sendefrequenz von einem Frequenzgeber des Knotens abgeleitet ist. Ferner weist die Basisstation 100 eine Einrichtung 104 zum Ermitteln der Knoten-Sendefrequenz basierend auf dem empfangenen Datenpaket und zum Ermitteln einer Abweichung des Frequenzgebers des Knotens basierend auf einer Frequenzabweichung zwischen der ermittelten Knoten-Sendefrequenz und einer dem Knoten zugeordneten Soll-Knoten-Sendefrequenz auf. Des Weiteren weist die Basisstation 100 eine Einrichtung 106 zum Senden eines Datenpakets zu dem Knoten mit einer Basisstation-Sendefrequenz auf, wobei die Einrichtung 106 zum Senden des Datenpakets ausgebildet ist, um die Basisstation-Sendefrequenz basierend auf der ermittelten Abweichung des Frequenzgebers des Knotens einzustellen.

Bei Ausführungsbeispielen wird die Abweichung des Frequenzgebers des Knotens von der Basisstation 100 basierend auf der Frequenzabweichung zwischen der ermittelten Knoten-Sendefrequenz und der dem Knoten zugeordneten Soll-Knoten-Sendefrequenz ermittelt und die Basisstation-Sendefrequenz basierend auf der ermittelten Abweichung des Frequenzgebers des Knotens eingestellt. Indem die Basisstation 100 die Basisstation-Sendefrequenz basierend auf der ermittelten Abweichung des Frequenzgebers des Knotens einstellt, kann die Datenübertragung von der Basisstation 100 zu dem Knoten 120 an die Knoten-Empfangsfrequenz, die von dem Frequenzgeber des Knotens abgeleitet ist und dementsprechend ebenfalls abweichen kann, angepasst werden.

Beispielsweise kann die Einrichtung 106 zum Senden des Datenpakets zu dem Knoten ausgebildet sein, um die Basisstation-Sendefrequenz basierend auf der ermittelten Abweichung des Frequenzgebers des Knotens auf die Knoten-Empfangsfrequenz abzustimmen.

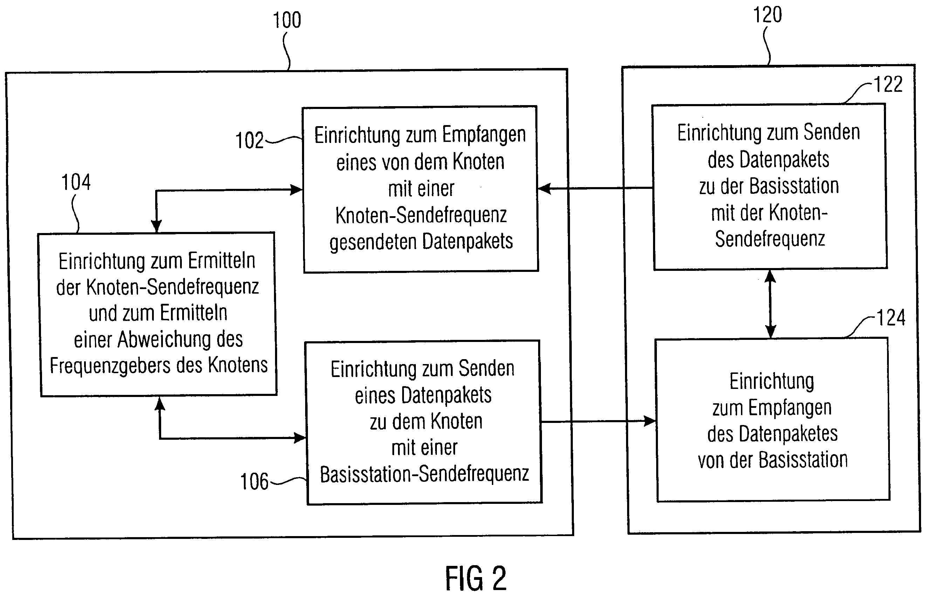

Im Vergleich zu dem Knoten 120 (siehe Fig. 2) steht in der Basisstation 100 in der Regel mehr Rechenleistung und/oder eine komplexere Hardware zur Verfügung, d. h. im Allgemeinen ein Empfänger 102 mit höherer Leistungsfähigkeit. Darüber hinaus werden für den Frequenzgeber des Knotens 120 in der Regel günstige Quarze verwendet, die eine Frequenzabweichung von mehr als 10 ppm aufweisen können. Durch die Schätzung der Frequenzabweichung der Knoten-Sendefrequenz von der Soll-Knoten-Sendefrequenz (Sendefrequenzoffset bzw. Sendefrequenzversatz) durch die Basisstation 100 und durch die Beaufschlagung dieser Frequenzabweichung (Sendefrequenzoffset) auf die Datenübertragung (Sendung) von der Basisstation 100 zu dem Knoten 120, kann der Knoten 120 entlastet und die Komplexität der Verarbeitung in die Basisstation 100 verschoben werden.

Die vorliegende Erfindung ermöglicht es, dass die Hardware der Knoten sehr einfach und günstig gebaut werden kann, da keine teuren und aufwändigen Vorrichtungen zur Erzeugung einer genauen Frequenz oder frequenzgenaue Filter benötigt werden. Mit Standardbaugruppen/ICs (IC = Integrated Circuit, dt. integrierte Schaltung) am Knoten 120 kann eine sehr hohe Reichweite in der Datenübertragung von der Basisstation 100 zu dem Knoten erreicht werden, da die Basisstation 100 die Frequenzkorrektur der Datenübertragung von der Basisstation 100 zu dem Knoten 120 (Rückkanal) übernimmt, dadurch kann der Empfänger 124 des Knotens 120 sehr schmalbandig und empfindlich sein. Dadurch ist es möglich, den Knoten 120 energiesparender aufzubauen und somit z. B. bei batteriebetriebenen Knoten 120 die Batterielebensdauer zu erhöhen. Die Reichweite der Datenübertragung von dem Knoten 120 zu der Basisstation 100 kann durch einen in Hardware und Rechenaufwand aufwändigeren Empfänger 102 erhöht werden. Durch die vorliegende Erfindung ist es möglich, die Reichweite der Datenübertragung von der Basisstation 100 zu dem Knoten zu erhöhen, da in dem Knoten ein schmalbandigerer Empfangsfilter eingesetzt werden kann und die Basisstation eine Korrektur der Frequenzabweichung (Frequenzoffset-Korrektur) in der Sendung zum Knoten 120 vornimmt. Am Knoten 120 wird im Empfänger 124 keine oder nur eine in einem kleinen Bereich arbeitende Frequenzsynchronisation auf die Datenpakete der Basisstation 100 benötigt.

Fig. 2 zeigt ein Blockschaltbild eines Systems 110 zur bidirektionalen Datenübertragung gemäß einem Ausführungsbeispiel der vorliegenden Erfindung. Das System 110 weist den Knoten 120 sowie die in Fig. 1 gezeigte Basisstation 100 auf. Der Knoten 120 weist eine Einrichtung 122 zum Senden des Datenpakets zu der Basisstation 100 mit der Knoten-Sendefrequenz und eine Einrichtung 124 zum Empfangen des Datenpakets von der Basisstation 100 auf, wobei die Einrichtung zum Empfangen 124 des Datenpakets von der Basisstation 100 einen Empfangsfilter mit einer Bandbreite von weniger als 5 %, 1 %, 0,5 %, 0,1 % oder 0,01 % der Trägerfrequenz aufweist.

Bei Ausführungsbeispielen der vorliegenden Erfindung kann der Knoten 120 ein Sensor oder Zähler, wie z. B. ein Temperatursensor, Heizungs-, Strom- oder Wasserzähler sein. Der Knoten 120 kann beispielsweise eine Messeinrichtung aufweisen, wobei die Messdaten, z. B. ein Sensorwert oder Zählerstand, drahtlos zu der Basisstation 100 übertragen werden. Das System 110 ist bidirektional, d.h. das System 110 weist einen Hinkanal und einen Rückkanal auf. Ferner wird zwischen einem unkoordinierten und einem koordinierten Betrieb unterschieden. In der Basisstation 100 kann, im Vergleich zum Knoten 120, mehr Rechenleistung und eine hochwertigere Hardware mit digitaler Signalverarbeitung zur Verfügung stehen. Daher ist die Empfangsempfindlichkeit der Basisstation 100 im Allgemeinen höher als die des Knotens 120. Üblicherweise sind aber beide (Basisstation 100 und Knoten 120) von der Regulierung in der maximalen Sendeleistung beschränkt.

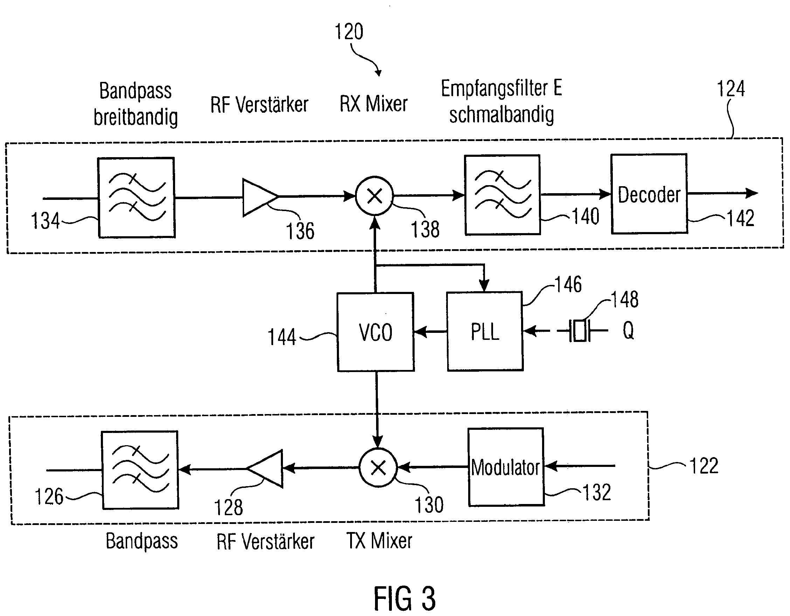

Fig. 3 zeigt ein Blockschaltbild eines herkömmlichen Knotens 120. Die Einrichtung 122 zum Senden des Datenpakets weist einen Bandpassfilter 126, einen RF-Verstärker 128 (RF = Radio Frequenz), einen Sende-Mixer 130 (RX-Mixer) und einen Modulator 132 auf. Die Einrichtung 124 zum Empfang des Datenpakets weist einen breitbandigen Bandpassfilter 134, einen RF-Verstärker 136, einen Empfangsmixer 138 (RX-Mixer), einen schmalbandigen Empfangsfilter 140 und einen Decoder 142 auf. Ferner weist der Knoten 120 einen VCO (VCO = Voltage Controlled Oscillator, dt. spannungsgerregelter Oszillator), eine PLL 146 (PLL = Phase Lock Loop, dt. Phasenregelschleife) und einen Frequenzgeber 148 auf, wobei der Frequenzgeber 148 in der Regel ein Quarz Q ist. Der VCO 144 stellt die Frequenz für den RX-Mixer 138 und den TX-Mixer 130 bereit.

Somit wird ein Konzept benötigt, mit welchem die Empfindlichkeit des Empfängers 124 im Knoten 120 erhöht werden kann. Eine Möglichkeit besteht darin, eine schmalbandige Modulation für die Datenübertragung von der Basisstation 100 zu dem Knoten 120 zu verwenden. Dadurch kann der Empfangsfilter E (140) schmalbandiger gemacht werden. Dadurch kommt weniger Rauschen in den Decoder 142 und somit steigt das am Decoder 142 anliegende SNR-Verhältnis (SNR = Signal to Noise Ratio, dt. Signal zu Rauschverhältnis). Dadurch wird der Empfänger 124 des Knotens 120 empfindlicher. Es ist jedoch nicht ohne Weiteres möglich, den Empfangsfilter E (41) sehr schmal zu wählen. Bedingt durch z. B. Alterung, Temperaturdrift und Herstellungstoleranzen weist der Quarz Q einen Quarz-Offset Qo auf. Dieser wird üblicherweise in PPM (PPM = Parts per Million, dt. Teile von einer Million) gemessen. Bei günstigen Quarzen (in der Regel sind günstige Quarze notwendig, um den Preis der Knoten 120 niedrig zu halten) liegt dieser im Bereich von Q₀ = 20 PPM. Bei einer Betriebsfrequenz des Systems von F = 800 MHz kommt es zu einer Schwankung der Knoten-Empfangsfrequenz im Bereich d = 800 MHz mal 20 PPM = 16 KHz. Der Empfangsfilter E (140) muss nun herkömmlicherweise um ein Vielfaches der möglichen Schwankung der Knoten-Empfangsfrequenz breiter sein, um ein Datenpaket (Signal) sicher empfangen zu können.

In einem System 110 mit der Basisstation 100 und einer Mehrzahl von Knoten 120, sendet jeder Knoten 120 zuerst im unkoordinierten Betrieb zu einem pseudozufälligen Zeitpunkt Datenpakete (Anmeldungsdatenpakete) im Frequenzbereich U (für unkoordinierte Aussendungen) aus. Die Basisstation 100 empfängt dieses Datenpaket (Anmeldungsdatenpakete) und ermittelt die Knoten-Sendefrequenz Sf und bestimmt bzw. ermittelt daraus den Quarz-Offset des Quarzes Q des Knotens 120.

Typischerweise wird die Mischerfrequenz des Empfangszweigs 124 aus dem gleichen Quarz Q abgeleitet, wie die Mischerfrequenz des Sendezweiges 122. Dadurch kann die Basisstation 100 die Knoten-Empfangsfrequenz Ef bestimmen. Im einfachsten Fall ist dabei die Knoten-Sendefrequenz gleich der Knoten-Empfangsfrequenz (Ef = Sf). Nun sendet die Basisstation 100 Datenpakete (Koordinationsdatenpaket) möglichst genau auf der Frequenz Ef zurück, d.h. die Basisstation 100 stimmt die Basisstation-Sendefrequenz auf die Knoten-Empfangsfrequenz ab. Da die genaue Knoten-Empfangsfrequenz bekannt ist, kann der Empfangsfilter E (140) des Knotens 120 sehr schmalbandig gewählt werden.

Ein weiterer Vorteil ist, dass im Decoder 142 dadurch auch keine oder nur eine einfache Synchronisation des Empfängers 124 auf die Basisstation-Sendefrequenz erfolgen muss, da die Basisstation 100 so genau wie möglich auf der Knoten-Empfangsfrequenz zurücksendet.

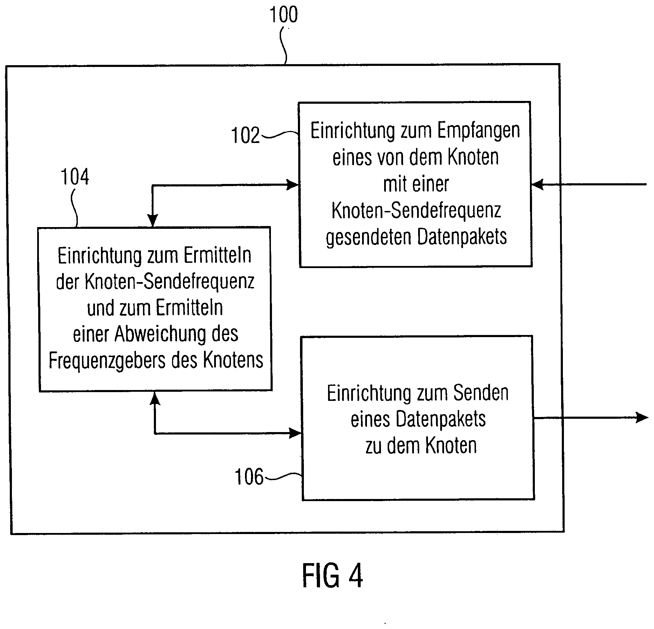

Fig. 4 zeigt ein Blockdiagramm einer Basisstation 100 mit bidirektionaler Datenübertragung zu einem Knoten 120 gemäß einem weiteren Ausführungsbeispiel der vorliegenden Erfindung. Die Basisstation 100 weist eine Einrichtung 102 zum Empfangen eines von den Knoten mit einer Knoten-Sendefrequenz gesendeten Datenpakets auf, wobei die Knoten-Sendefrequenz von einem Frequenzgeber des Knotens 120 abgeleitet ist. Ferner weist die Basisstation 100 eine Einrichtung 104 zum Ermitteln der Knoten-Sendefrequenz basierend auf dem empfangenen Datenpaket und zum Ermitteln einer Abweichung des Frequenzgebers des Knotens 120 basierend auf einer Frequenzabweichung zwischen der ermittelten Knoten-Sendefrequenz und einer dem Knoten 120 zugeordneten Soll-Knoten-Sendefrequenz auf. Des Weiteren weist die Basisstation 100 eine Einrichtung 106 zum Senden eines Datenpakets zu dem Knoten 120 auf, wobei das Datenpaket die ermittelte Abweichung des Frequenzgebers des Knotens 120 oder einen davon abgeleiteten Korrekturwert aufweist.

Bei Ausführungsbeispielen sind die Abweichung des Frequenzgebers des Knotens 120 von der Basisstation 100 basierend auf der Frequenzabweichung zwischen der ermittelten Knoten-Sendefrequenz und der dem Knoten zugeordneten Soll-Knoten-Sendefrequenz ermittelt, und die ermittelte Abweichung des Frequenzgebers des Knotens oder ein davon abgeleiteter Korrekturwert in dem Datenpaket zu dem Knoten 120 übertragen. In anderen Worten, durch die Schätzung der Frequenzabweichung der Knoten-Sendefrequenz von der Soll-Knoten-Sendefrequenz (Sendefrequenzoffset) durch die Basisstation 100 und durch die Übertragung der Frequenzabweichung oder einem davon abgeleiteten Korrekturwert zu dem Knoten 120, kann der Knoten 120 entlastet und die Komplexität der Verarbeitung in die Basisstation 100 verschoben werden.

Im Vergleich zu der in Fig. 1 gezeigten Basisstation 100 wird nicht die Basisstation-Sendefrequenz basierend auf der ermittelten Abweichung des Frequenzgebers des Knoten 120 eingestellt, sondern die ermittelte Abweichung des Frequenzgebers des Knotens 120 oder ein davon abgeleiteter Korrekturwert in dem Datenpaket zu dem Knoten 120 gesendet.

Die vorliegende Erfindung ermöglicht es, dass die Knoten 120 in einem sehr engen Frequenzraster senden, ohne sich durch ein Senden mit unterschiedlichen Frequenzabweichungen (Frequenz-Offset) gegenseitig in den Kanälen zu stören. Selbst eine Abweichung der Absolutfrequenz der Basisstation 100 ist unerheblich, da alle Knoten 120 von der Basisstation 100 auf ihre Soll-Knoten-Sendefrequenz (Zielfrequenz) korrigiert werden und somit das relative Kanalraster der Knoten 120 zueinander fest ist. Durch dieses enge Kanalraster ist es möglich, dass viele Knoten 120 gleichzeitig senden, ohne sich zu stören, dadurch kann die Datenübertragungsrate erhöht werden. Ferner können die Knoten 110 sehr weit an die Bandgrenze hin senden. Damit erhöht sich die verfügbare Sendebandbreite und die Datenübertragungsrate kann erhöht werden. Ohne die Korrektur durch die Basisstation 100 müssten die Knoten 120, bedingt durch die Frequenzabweichung (Sendefrequenz-Offset), einen größeren bzw. weiteren Abstand zur Bandgrenze halten.

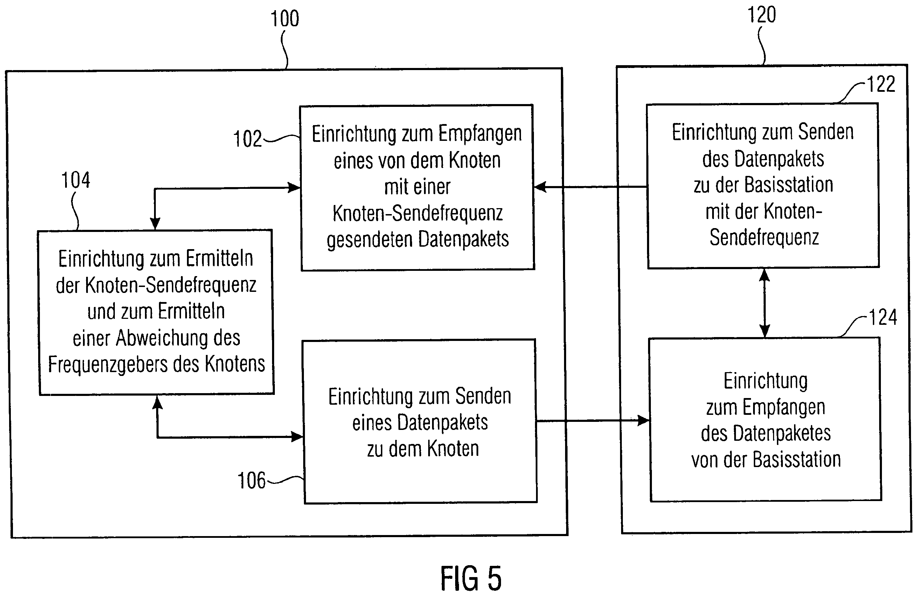

Fig. 5 zeigt ein Blockschaltbild eines Systems 110 mit bidirektionaler Datenübertragung gemäß einem Ausführungsbeispiel der vorliegenden Erfindung. Das System 110 weist den Knoten 120 sowie die in Fig. 4 gezeigte Basisstation 100 auf. Der Knoten 120 weist eine Einrichtung 122 zum Senden des Datenpakets zu der Basisstation 100 mit der Knoten-Sendefrequenz und eine Einrichtung 124 zum Empfangen des Datenpakets von der Basisstation 100 auf. Die Einrichtung 122 zum Senden des Datenpakets zu der Basisstation 100 ist ausgebildet, um die Knoten-Sendefrequenz basierend auf der ermittelten Abweichung des Frequenzgebers oder dem davon abgeleiteten Korrekturwert auf die Soll-Knoten-Sendefreqenz einzustellen.

Im folgenden wird ein Ausführungsbeispiel der vorliegenden Erfindung beschrieben, bei dem die erfindungsgemäße Basisstation 100 in einem FDMA System 110 (FDMA = Frequency Division Multiple Access, dt. Frequenzmultiplexverfahren) mit einer Mehrzahl von Knoten 120 eingesetzt wird, wobei zunächst auf die Grundlagen von FDMA eingegangen wird.

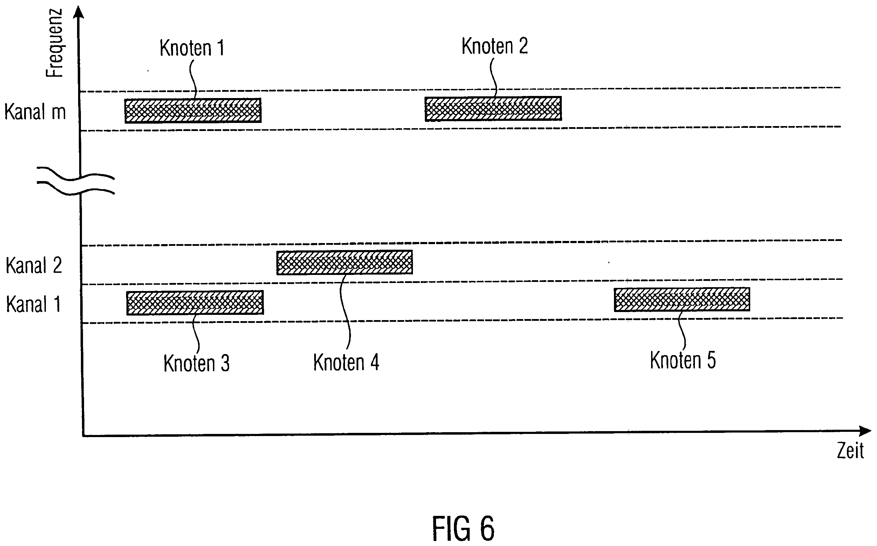

Fig. 6 zeigt ein Diagramm einer Auslastung eines Kommunikationskanals eines FDMA Systems über die Zeit, wobei die Ordinate die Frequenz und die Abszisse die Zeit beschreibt. Bei einem FDMA System kommunizieren Teilnehmer (Basisstation 100 und Knoten 120) auf unterschiedlichen Frequenzen bzw. Kanälen, wobei ein Kanal eine Frequenz (Mittenfrequenz) und definierte Bandbreite aufweist. Dadurch können mehrere Teilnehmer, ohne sich gegenseitig zu stören, gleichzeitig Datenpakete senden. Beispielsweise sendet zum Zeitpunkt T1 ein erster Knoten 120 im Kanal M und ein dritter Knoten im Kanal 1, zum Zeitpunkt T2 ein vierter Knoten im Kanal 2, zum Zeitpunkt T3 ein zweiter Knoten im Kanal M und zum Zeitpunkt D4 ein fünfter Knoten im Kanal 1. In Fig. 6 teilen sich der erste Knoten und der zweite Knoten den Kanal M, so dass es sich in Fig. 6 um ein FDMA-System mit zusätzlichem TDMA handelt (TDMA = Time Division Multiple Access, dt. Zeitmultiplexverfahren).

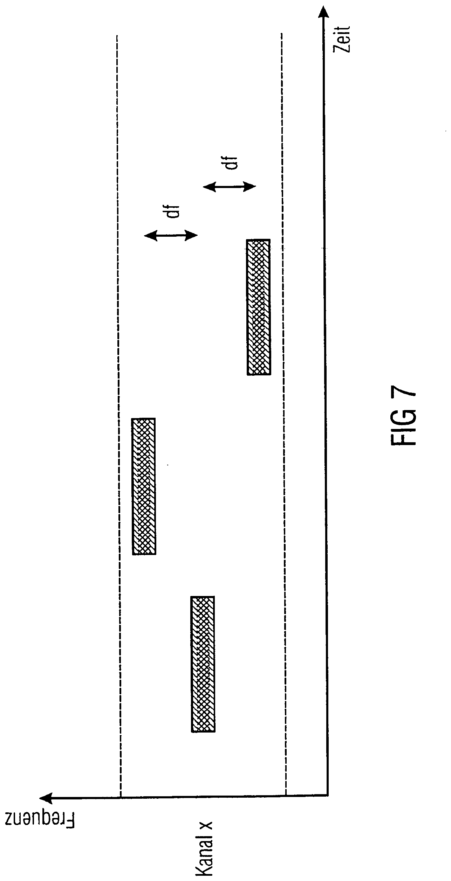

Fig. 7 zeigt ein Diagramm einer Frequenzabweichung einer Knoten-Sendefrequenz von der Mittenfrequenz eines Kanals x, wobei die Ordinate die Frequenz und die Abszisse die Zeit beschreibt. Schwankt nun die Knoten-Sendefrequenz, bedingt durch den Quarz-Offset Q der Knoten, um die Mittenfrequenz fk des Kanals x im Bereich +/- df, so muss die Kanalbandbreite um den Faktor 2 df größer gewählt werden im Vergleich zu Knoten 120, deren Quarz-Offset korrigiert ist.

Die Frequenzabweichung der Knoten-Sendefrequenz (Frequenzoffset) wird korrigiert, indem nun Korrekturinformationen von der Basisstation 100, die die Knoten-Sendefrequenz der jeweiligen Knoten 120 ermittelt, an die jeweiligen Knoten 120 übertragen wird. Dadurch kann der Bereich df verkleinert werden und dadurch die Anzahl der Kanäle des FDMA Systems mit der erfindungsgemäßen Basisstation 100 erhöht werden.

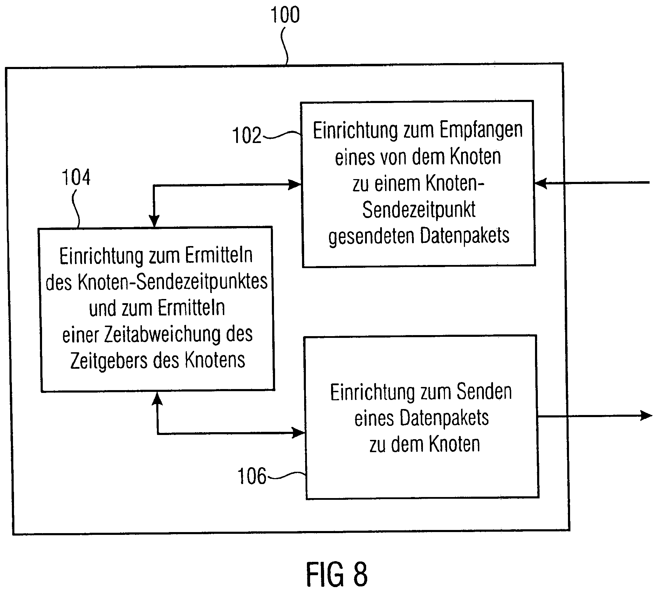

Fig. 8 zeigt ein Blockdiagramm einer Basisstation 100 mit bidirektionaler Datenübertragung zu einem Knoten 120 gemäß einem weiteren Ausführungsbeispiel der vorliegenden Erfindung. Die Basisstation 100 weist eine Einrichtung 102 zum Empfangen eines von dem Knoten 120 zu einem Knoten-Sendezeitpunkt gesendeten Datenpakets auf, wobei der Knoten-Sendezeitpunkt von einem Zeitgeber des Knotens 120 abgeleitet ist. Ferner weist die Basisstation 100 eine Einrichtung 104 zum Ermitteln des Knoten-Sendezeitpunkts basierend auf dem empfangenen Datenpaket und zum Ermitteln einer Zeitabweichung des Zeitgebers des Knotens basierend auf einer Zeitabweichung zwischen dem ermittelten Knoten-Sendezeitpunkt und einem dem Knoten zugeordneten Soll-Knoten-Sendezeitpunkt auf. Des Weiteren weist die Basisstation 100 eine Einrichtung 106 zum Senden eines Datenpakets zu dem Knoten 120 auf, wobei das Datenpaket die ermittelte Zeitabweichung des Zeitgebers des Knotens 120 oder einen davon abgeleiteten Korrekturwert aufweist.

Bei Ausführungsbeispielen wird die Abweichung des Zeitgebers bzw. Zeitbasis des Knotens 120 von der Basisstation 100 basierend auf der Zeitabweichung zwischen dem ermittelten Knoten-Sendezeitpunkt und einem dem Knoten 120 zugeordneten Soll-Knoten-Sendezeitpunkt ermittelt, und die ermittelte Zeitabweichung des Zeitgebers des Knotens 120 oder ein davon abgeleiteter Korrekturwert zu dem Knoten 120 in dem Datenpaket übertragen.

Im Vergleich zu der in Fig. 1 und Fig. 5 gezeigten Basisstation 100, die ausgebildet ist, um die Frequenzabweichung des Frequenzgebers des Knotens 120 basierend auf der Frequenzabweichung zwischen dem ermittelten Knoten-Sendefrequenz und der dem Knoten 120 zugeordneten Soll-Knoten-Sendefrequenz zu ermittelt, ist die in Fig. 8 gezeigte Basisstation 100 ausgebildet, um die Zeitabweichung des Zeitgebers des Knotens 120 basierend auf der Zeitabweichung zwischen dem ermittelten Knoten-Sendezeitpunkt und dem, dem Knoten 120 zugeordneten Soll-Knoten-Sendezeitpunkt zu ermitteln. Bei Ausführungsbeispielen kann die erfindungsgemäße Basisstation 100 darüber hinaus ausgebildet sein, um die Frequenzabweichung des Frequenzgebers des Knotens 120 und die Zeitabweichung des Zeitgebers des Knotens 120 zu ermitteln.

Die Einrichtung 102 zum Empfangen des von dem Knoten 120 zu dem Knoten-Sendezeitpunkt gesendeten Datenpakets kann ausgebildet sein, um ein von dem Knoten 120 zu einem weiteren Knoten-Sendezeitpunkt gesendetes weiteres Datenpaket zu empfangen, wobei der weitere Knoten-Sendezeitpunkt vom Zeitgeber des Knotens 120 abgeleitet ist. Die Einrichtung 104 zum Ermitteln des Knoten-Sendezeitpunktes kann ausgebildet sein, um den weiteren Knoten-Sendezeitpunkt basierend auf dem weiteren Datenpaket zu ermitteln, wobei die Einrichtung 104 zum Ermitteln der Zeitabweichung des Zeitgebers des Knotens 120 ausgebildet ist, um eine weitere Zeitabweichung zwischen dem ermittelten weiteren Knoten-Sendezeitpunkt und einem dem Knoten 120 zugeordneten weiteren Soll-Knoten-Sendezeitpunkt zu ermitteln, und um eine Taktabweichung des Zeitgebers des Knotens 120 basierend auf der Zeitabweichung und der weiteren Zeitabweichung zu ermitteln. Die Einrichtung 106 zum Senden des Datenpakets zu dem Knoten 120 kann ausgebildet sein, um das Datenpaket mit der ermittelten Taktabweichung des Zeitgebers oder einem davon abgeleiteten Korrekturwert aufweisend zu dem Knoten 120 zu senden.

Durch die Schätzung der Zeitabweichung (Offset der Zeitbasis, d.h. um wie viel geht die Uhr falsch) und der Taktabweichung des Zeitgebers (Frequenz-Offset der Zeitbasis, d.h. um wie viel geht die Uhr zu schnell oder zu langsam) des Knotens 120 durch die Basisstation 100 und durch die Übertragung dieser Abweichungen oder der daraus abgeleiteten Korrekturwerte zu dem Knoten 120 kann der Knoten 120 weiter entlastet und die Komplexität der Verarbeitung in die Basisstation verschoben werden.

Bei Ausführungsbeispielen kann die Einrichtung 106 zum Senden des Datenpakets zu dem Knoten 120 ausgebildet sein, um das Datenpaket mit einem Basisstation-Sendezeitpunkt oder einem davon abgeleiteten Wert aufweisend zu dem Knoten 120 zur Synchronisation eines Knoten-Empfangszeitpunktes zu senden.

Beispielsweise können die Knoten 120, auch ohne andauernde Aktualisierung ihrer Zeit (dadurch Einsparen von Leistungsaufnahme der Knoten 120, da der Empfänger 124 seltener eingeschaltet werden muss), sehr lange und sehr genau in einem bestimmten Zeitraster senden. Dadurch sind kleinere Schutzabstände zwischen dem Aussenden von Datenpaketen möglich, wodurch die Datenübertragungsrate erhöht werden kann. Die benötigte Zeit, in der der Empfänger 124 eingeschaltet werden muss, um Informationen von der Basisstation 100 zu empfangen, verringert sich, da der Zeitpunkt des Einschaltens genauer bestimmt werden kann. Die benötigte Rechenleistung am Knoten 120 ist geringer, da keine aufwändigen Verfahren zur Synchronisation auf die Basisstation 100 verwendet werden müssen. Damit kann der Knoten 120 sehr energiesparend entworfen werden, da Datenpakete bzw. Datensymbole ohne Synchronisationsinformation zu definierten Zeitpunkten gesendet werden können. Ferner kann eine Übertragungszeit/Sendeleistung an der Basisstation 100 eingespart werden, da keine Synchronisationssequenzen nötig sind. Ferner weist die Datenübertragung von der Basisstation 100 zu den Knoten 120 durch die Aufteilung der Datenpakete (Datensymbole) auf verschiedene Frequenzen bzw. Kanäle und/oder die Verwendung eines Fehlerschutzverfahrens eine erhöhte Übertragungssicherheit auf. Ferner kann die Synchronisationssequenz vom Knoten 120 zur Basisstation 100 verkürzt werden, was zu einer Einsparung von Übertragungszeit/Sendeleistung am Knoten 120 führt. Dadurch ist es möglich, den Knoten 120 energiesparender aufzubauen und somit z. B. bei batteriebetriebenen Knoten 120 die Batterielebensdauer zu erhöhen.

Im Gegensatz zu GSM (GSM = Global System for Mobile Communications, dt. globales System für Mobilkommunikation), welches eine Schätzung zur Synchronisation im TDMA Schema nutzt, wird bei der vorliegenden Erfindung die Genauigkeit der Zeitschätzung auf Symboldauer genau geschätzt und kompensiert, damit die zeitliche Synchronisation im Empfänger 124 vereinfacht oder darauf verzichtet werden kann. Darüber hinaus ist die vorliegenden Erfindung, im Gegensatz zu GSM, das Verbindungsorientiert ist, auf paketorientierte Protokolle fokussiert.

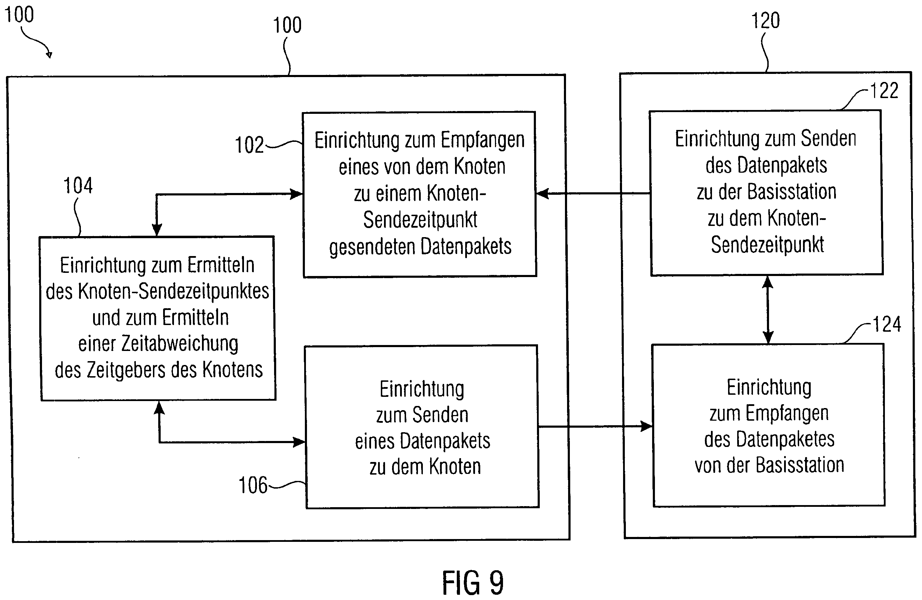

Fig. 9 zeigt ein Blockschaltbild eines Systems 110 mit bidirektionaler Datenübertragung gemäß einem Ausführungsbeispiel der vorliegenden Erfindung. Das System 110 weist den Knoten 120 sowie die in Fig. 9 gezeigte Basisstation 100 auf. Der Knoten 120 weist eine Einrichtung 122 zum Senden des Datenpakets zu der Basisstation 100 zu dem Knoten-Sendezeitpunkt und eine Einrichtung 124 zum Empfangen des Datenpakets von der Basisstation auf, wobei die Einrichtung 122 zum Senden des Datenpakets ausgebildet ist, um den Knoten-Sendezeitpunkt basierend auf der ermittelten Abweichung des Zeitgebers oder dem davon abgeleiteten Korrekturwert auf den Soll-Knotensendezeitpunkt einzustellen.

Im folgenden wird ein Ausführungsbeispiel der vorliegenden Erfindung beschrieben, bei dem die erfindungsgemäße Basisstation 100 in einem TDMA System 110 (TDMA = time division multiple access, dt. Zeitmultiplexverfahren) mit einer Mehrzahl von Knoten 120 eingesetzt wird, wobei zunächst auf die Grundlagen von TDMA eingegangen wird.

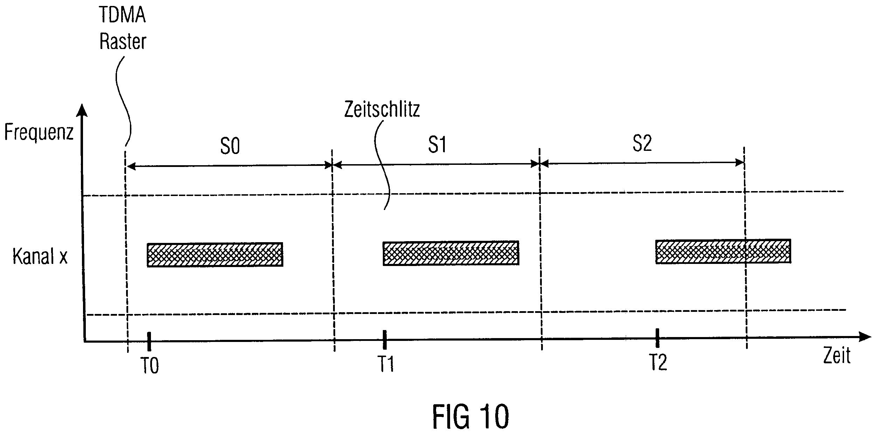

Fig. 10 zeigt ein Diagramm einer Auslastung eines Kommunikationskanals eines TDMA Systems über die Zeit, wobei die Ordinate die Frequenz und die Abszisse die Zeit beschreibt. Bei einem TDMA System teilen sich die Basisstation 110 und die Mehrzahl von Knoten 120 einen Frequenzkanal (Kanal x), wobei die Basisstation 110 und die Mehrzahl von Knoten 120 zu unterschiedlichen Zeitpunkten senden, z. B. zu den Zeitpunkten T0, T1 und T2. Das TDMA Raster kann in gleiche, unterschiedliche oder variable Zeitschlitze (engl. time slots) unterteilt sein, z. B. in die Zeitschlitze S0, S1 und S2. Ein Knoten 120 kann zufällig in einem Zeitschlitz (slotted ALOHA, dt. unterteiltes ALOHA) oder in einem zugewiesenen Zeitschlitz senden, wobei der Knoten-Sendezeitpunkt von einem Zeitgeber (Zeitbasis) des Knotens 120 abgeleitet ist. Der Knoten-Sendezeitpunkt T0, T1 oder T2 sollte dabei zeitlich derart innerhalb eines Zeitschlitzes S0, S1 oder S2 liegen, dass das Datenpaket von dem Knoten 120 zu der Basisstation 100 innerhalb des Zeitschlitzes S0, S1 oder S2 übertragen wird.

Durch eine Abweichung (Zeitabweichung und/oder Taktabweichung) des Zeitgebers des Knotens 120 kann es zu einer Abweichung bzw. Schwankung des Knoten-Sendezeitpunktes T0, T1 oder T2 kommen, wie dies in Fig. 10 gezeigt ist. Ferner kann es zu einem Übertragungsfehler kommen, wenn die Schwankung des Knoten-Sendezeitpunktes T2 so groß ist, dass das Datenpaket nicht mehr innerhalb des Zeitschlitzes S2 übertragen werden kann.

Zur Verringerung der Abweichung bzw. Schwankung des Knoten-Sendezeitpunktes kann die Basisstation 100 die Zeitabweichung des Zeitgebers des Knotens 100 ermitteln. Hierzu wird von der Basisstation 100 der Knoten-Sendezeitpunkt (d. h. der Zeitpunkt, wann der Knoten sein unkoordiniertes Paket gesendet hat) gemessen bzw. ermittelt. Die Basisstation 100 sendet dem Knoten 120 die ermittelte Zeitabweichung des Zeitgebers des Knotens 120 oder einen davon abgeleiteten Korrekturwert, z. B. eine Zeitdifferenz relativ zu dem Knoten-Sendezeitpunkt, wann der Knoten 120 senden soll (dieses kann man sich als senden einer Uhrzeit vorstellen). Somit kann der Knoten 120 den Soll-Knotensendezeitpunkt T0 bestimmen und im TDMA Raster senden. Zusätzlich kann die Basisstation 100 dem Knoten 120 auch den Kanal mitteilen. Dadurch sind dem Knoten 120 TDMA Zeitschlitz und FDMA Frequenz bekannt. Sendungen im TDMA Raster und auf dem zugewiesenen Kanal werden als koordinierte Sendungen des Knotens 120 bezeichnet.

Um die Abweichung bzw. Schwankung weiterer Knoten-Sendezeitpunkte zu reduzieren, kann die Basisstation 100 eine Taktabweichung des Zeitgebers des Knotens 120 ermitteln. Üblicherweise wird als Zeitgeber (Zeitbasis) in den Knoten 120 ein 32 kHz Uhrenquarz verwendet, der eine Taktabweichung (engl. offset) aufweist. Zum einen kann die Basisstation 100 Korrekturwerte für die weiteren Knoten-Sendezeitpunkte senden. Damit die Basisstation 100 diese Korrekturwerte nur selten senden muss, kann die Basisstation 100 die Taktabweichung des Quarzes des Zeitgebers des Knotens 120 bestimmen. Diese Taktabweichung (um wie viel geht die Uhr zu schnell oder zu langsam) kann die Basisstation 100 durch Auswertung der Messung des Eintreffens der Datenpakete vom Knoten 120 bestimmen. Kommandiert die Basisstation 100 den Knoten 120, dass dieser ein Datenpaket zu dem Soll-Knoten-Sendezeitpunkt T0 und ein weiteres Datenpaket zu dem weiteren Soll-Knoten-Sendezeitpunkt T1 senden soll, und empfängt die Basisstation 100 das Datenpaket zum Knoten-Sendezeitpunkt Ts0 und das weitere Datenpaket zum weiteren Knoten-Sendezeitpunkt Ts1, dann kann die Taktabweichung des Quarzes des Zeigebers des Knotens 120 zu ((Ts1-Ts0) - (T1-T0)) / (T1-T0) abgeschätzt werden.

Durch eine Mittelung über die Auswertung des Empfangs mehrerer Datenpakete vom Knoten 120 kann die Genauigkeit der Schätzung der Taktabweichung verbessert werden. Korrigiert der Knoten 120 die Taktabweichung, kann er länger im TDMA Raster senden, ohne das Korrekturinformationen zum TDMA Raster von der Basisstation 100 zum Knoten 120 übertragen werden müssen. Bei effizienten Übertragungsverfahren sendet der Knoten 120 üblicherweise bei jeder Sendung an die Basisstation 100 zusätzlich eine Synchronisationssequenz, damit die Basisstation 100 das Datenpaket detektieren kann. Im koordinierten Betrieb kann die Synchronisationssequenz kleiner bzw. kürzer werden, da die Basisstation 100 bereits den ungefähren Knoten-Sendezeitpunkt (d. h. den Zeitpunkt, wann eine Sendung des Knotens 120 erfolgt) kennt. Durch die Korrektur der Taktabweichung kann der Knoten-Sendezeitpunkt genauer bestimmt werden. Dadurch ist es möglich, die Länge der Synchronisationssequenz noch weiter einzuschränken bzw. ganz auf die Synchronisationssequenz zu verzichten. Ob der Knoten 120 auf die Aussendung der Synchronisationssequenz verzichten kann, kann die Basisstation 100 bestimmen, z. B. durch die Auswertung, wie weit die Knoten-Sendezeitpunkte (Empfangszeitpunkte Ts) von den Soll-Knoten-Sendezeitpunkten (kommandierten Sendezeitpunkten T) abweichen.

Im Koordinierten Betrieb des TDMA Systems 110 kann es fest definierte Basisstation-Sendezeitpunkte geben, in denen die Basisstation 100 zu den Knoten 120 Datenpakete (Informationen) sendet. Um die Einrichtung 124 zum Empfangen von Datenpaketen (Empfänger 124) des Knotens 120 möglichst einfach zu machen, kann, falls die Modulationsart für Sendungen von der Basisstation 100 zum Knoten 120 passend gewählt wird, sogar auf eine dedizierte Synchronisation des Knotens 120 auf die Aussendung von der Basisstation 100 verzichtet werden, d.h. die Basisstation 100 braucht keine Synchronisationssequenz bei den Sendungen zu den Knoten 120 hin mit abzustrahlen. Eine mögliche Modulation ist hier z. B. OOK (OOK = on-off keying, dt. Amplitudenumtastung). Der Knoten 120 detektiert z. B. an bestimmten, dem Knoten 120 und der Basisstation 100 bekannten Basisstation-Sendezeitpunkten, ob die Basisstation 100 ein Signal abstrahlt oder nicht. Mit dem oben beschriebenen Verfahren können die Basisstation-Sendezeitpunkte von der Basisstation 100 dem Knoten 120 bekannt gemacht werden.

Bei einem Mehrteilnehmersystem bei dem einfache, batteriebetriebene Knoten 120 zyklisch Datenpakete an eine empfindlichere und komplexere Basisstation 100 senden, kann es bei einer großen Anzahl von Knoten 120, die nach einem zufallsbedingten Kanalzugriffsverfahren, z. B. ALOHA und slotted ALOHA, arbeiten zu Kollisionen von Datenpaketen unterschiedlicher Knoten 120 kommen und in der Folge zu Datenverlusten. Ist in solchen Systemen ein Rückkanal von der Basisstation 100 zu den Knoten 120 vorgesehen, kann der Knoten-Sendezeitpunkt (Sendezeitpunkt des Knotens) von der Basisstation 100 koordiniert werden. Eine Möglichkeit ist z. B. dass der Knoten 120 nur nach Aufforderung der Basisstation 100 antwortet. Dazu müsste der Knoten 120 aber dauernd den Funkkanal bzw. Kommunikationskanal abhören, was zu einer höheren Leistungsaufnahme führt.

Auch wenn die Basisstation 100 den Knoten 120 koordiniert, kann es sich bei dem verwendeten Frequenzband um ein allgemein nutzbares Funkband handeln, in dem sich andere Systeme befinden, die sich nicht von der erfindungsgemäßen Basisstation 100 koordinieren lassen. Es kommt in der Folge weiterhin zu Kollisionen durch diese Systeme. Ausführungsbeispiele der vorliegenden Erfindung erlauben es, die Knoten 120 so zu koordinieren, dass es zu möglichst geringer Eigenstörung (Sendefrequenz- und Sendezeit-Koordination) und möglichst geringer Fremdstörung (Ausnutzung der Bandgrenzen sowie Bandlücken und schmalbandige Übertragung) kommt.

Durch die unterschiedliche Leistungsfähigkeit von Knoten 120 und Basisstation 100 ist es notwendig die einfachen Knoten 120 weiter zu entlasten und die Komplexität der Verarbeitung in die Basisstation 100 zu verschieben. Kernelement ist eine exakte Schätzung des Frequenzgebers (Knoten-Referenzfrequenz) und Zeitgebers (Knoten-Zeitbasis) des Knotens 120. Es kann auch Lösungen geben, bei denen die Referenzfrequenz und die Zeitbasis voneinander abhängen.

Im folgenden wird ein Verfahren zum Koordinieren der Knoten 120 (Koordinationsverfahren) beschrieben, dass durch die erfindungsgemäße Basisstation 100 durchgeführt werden kann. Beim Koordinationsverfahren senden die Knoten 120 zunächst unkoordiniert, dann werden durch die Basisstation 100, z. B. wie in den oben genannten Ausführungsbeispielen der Basisstation 100 (z. B. wie in den Figuren 1, 5 und 8) beschrieben, Korrekturwerte ermittelt und die Knoten 120 koordiniert. Koordiniert senden die Knoten 120 entweder zufällig in definieren Zeitschlitzen (slotted Aloha) oder zu definierten Zeitschlitzen in zufällig gewählten definierten Kanälen bzw. Frequenzkanälen oder in definierten Frequenzkanälen.

Das Koordinationsverfahren ermöglicht somit einen höheren Datendurchsatz und eine sicherere Datenübertragung (z. B. definierte Latenz) und weniger benötigte Datenpakete gegenüber dem ALOHA Protokoll, da es zu verminderten (bei slotted Aloha) bzw. zu keinen Kollisionen kommt. Im Knoten 120 ist keine (aufwändige) Ermittlung und Verarbeitung von Korrekturwerten / Zeiten für das Einhalten der Zeitschlitze nötig, da diese Informationen von der Basisstation 100 für den jeweiligen Knoten 120 ermittelt werden und zu diesem im koordinierten Zustand regelmäßig (bei Bedarf, also bei auftretenden Abweichungen) übertragen werden. Dadurch ist möglich, den Knoten 120 energiesparender aufzubauen und somit z. B. bei batteriebetriebenen Knoten 120 die Batterielebensdauer zu erhöhen.

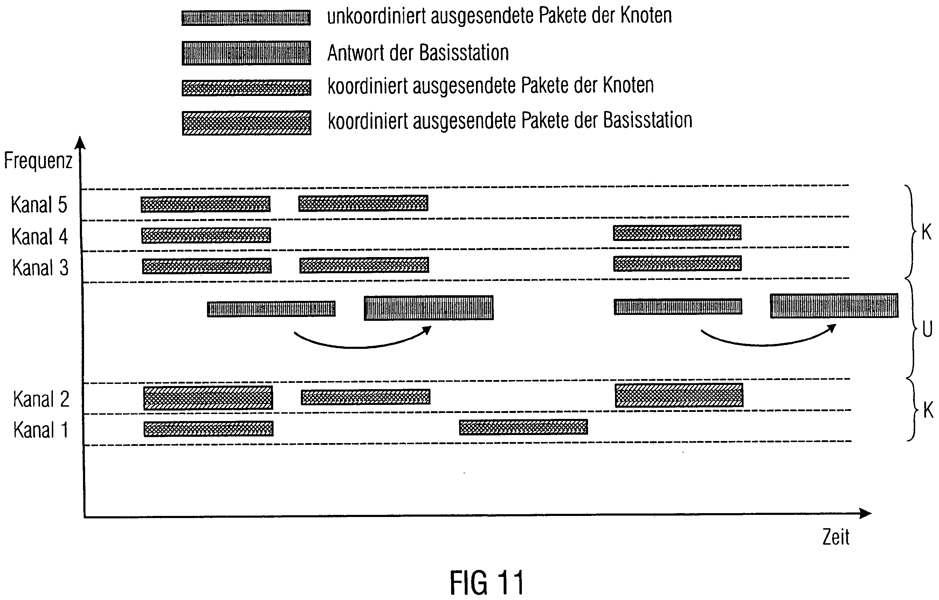

Fig. 11 zeigt ein Diagramm einer Auslastung eines Kommunikationskanals beim Koordinationsverfahren gemäß einem Ausführungsbeispiel der vorliegenden Erfindung, wobei die Ordinate die Frequenz und die Abszisse die Zeit beschreibt. Am Anfang senden die Knoten 120 unkoordiniert im unkoordinierten Frequenzbereich U. U kann getrennt vom koordinierten Frequenzbereich K sein, kann aber auch überlappen. Der Fall ohne Überlappung führt zu weniger Störungen im koordinierten Betrieb. U ist breiter als Kanäle im koordinierten Frequenzbereich K, da die Frequenz der Knoten 120 noch stärker abweichen kann, da noch keine Korrektur der Knoten-Sendefrequenz durch die Basisstation 100 vorgenommen wurde.

Die Basisstation 100 kann immer oder zeitweise im Frequenzbereich U empfangen. Empfängt die Basisstation 100 dort ein Datenpaket eines Knotens 120, so kann sie diesem Knoten 120, z. B. wie in den Ausführungsbeispielen der Figuren 4 und/oder 8 beschrieben, antworten und den Knoten 120 koordinieren (d.h. z. B. Frequenz / Zeit / Quarzoffset Information senden). Ab da sendet der Knoten 120 koordiniert im Frequenzbereich K.

Damit ist es möglich, auch Systeme zu koordinieren, bei denen sich die Aussendungen vieler Knoten 120 im Bereich U überlagern. Falls es Überlagerungen gibt, wird die Basisstation 100 zuerst die mit hoher Leistung empfangenen Knoten 120 finden. Wenn diese Knoten 120, die mit hoher Leistung an der Basisstation 100 ankommen, koordiniert sind, überlagern diese nicht mehr die schwach empfangenen Knoten 120 im Bereich U. Für die sichere Übertragung der Rückantwort der Basisstation 100 an den Knoten 120, könnte die Basisstation 100 im unkoordinierten Fall auch schmalbandig in einem koordinierten Kanal oder am Rande des unkoordinierten Kanals zurücksenden um Kollisionen mit bestehenden Knoten 120 zu reduzieren, die sich nicht koordinieren lassen.

Falls ein Knoten 120 über längere Zeit keine Korrekturdaten von der Basisstation 100 empfängt, kann der Knoten 120 wieder in den unkoordinierten Betrieb zurück fallen. Die Basisstation 100 kann bestimmen, ob sie den Knoten 120 erfolgreich in den koordinierten Betrieb kommandiert hat, indem sie überwacht, ob sie den Knoten 120 in den zugewiesenen Kanälen/Zeitschlitzen empfängt.

Ferner können Sensordaten vom Knoten 120 zu der Basisstation 100 auch bereits im unkoordinierten Betrieb übertragen werden, falls z. B. die Basisstation 100 die Fähigkeit nicht besitzt, Knoten 120 zu koordinieren, ist so auch ein Betrieb möglich.

Für die Kommunikation von der Basisstation 100 zu den Knoten 120 können bestimmte Zeitschlitze von der Basisstation 100 frei gehalten werden (d. h. es wird kein Knoten 120 so konfiguriert, dass er in diesem Zeitschlitz sendet). Bestenfalls wird dieser Zeitschlitz über der Frequenz variiert, um möglichen Störern ausweichen zu können. Information, die von der Basisstation 100 zum Knoten 120 gesendet wird, kann über mehrere Datenpakete, möglicherweise mit Fehlerschutz, aufgeteilt werden.

Darüber hinaus kann es Zeitschlitze geben, in denen nur einzelne Knoten 120 oder bestimmte Gruppen (z. B. nach Seriennummern aufgeschlüsselt) empfangen. Dadurch kann Information effizient an bestimmte Knoten 120 gesendet werden, ohne dass viele Knoten 120 die Daten empfangen müssen und hierzu Strom benötigen.

In bekannten Systemen versuchen die Knoten, zuerst eine Basisstation zu empfangen und sich darauf zu synchronisieren. Im Gegensatz zu bestehenden Systemen, in denen sich die Knoten auf die Basisstation synchronisieren, übernimmt gemäß dem Konzept der vorliegenden Erfindung die Basisstation 100 die Synchronisation der Frequenz und der Zeit der Knoten 120 für jeden der teilnehmenden Knoten 120. Dadurch kann die Hardware und die benötigte Rechenleistung in den Knoten 120 einfacher gestaltet werden sowie die Reichweite des Systems 110 vergrößert werden. Durch den koordinierten Betrieb, in den die Basisstationen 100 die Knoten 120 versetzen können, ist ein höherer Datendurchsatz bei geringerer Latenz sowie bei erhöhter Übertragungssicherheit möglich. Der Energieverbrauch der Knoten 120 kann gesenkt werden und somit kann bei batteriebetriebenen Knoten 120 die Batterielebensdauer erhöht werden.

Die oben beschriebenen Ausführungsbeispiele der vorliegenden Erfindung können auch auf Systeme angewendet werden, bei denen der Frequenzgeber (Frequenzbasis) des Knotens 120 und der Zeitgeber (Zeitbasis) des Knotens 120 gekoppelt sind. Dann kann über die Schätzung der Fehler in der Zeitbasis oder der Frequenzbasis auf den Fehler des jeweils anderen Parameters geschlossen werden.

Weitere Ausführungsbeispiele der vorliegenden Erfindung schaffen ein Verfahren zur bidirektionalen Datenübertragung zwischen einer Basisstation und einem Knoten. In einem ersten Schritt wird ein von dem Knoten mit einer Knoten-Sendefrequenz gesendetes Datenpaket empfangen, wobei die Knoten-Sendefrequenz von einem Frequenzgeber des Knotens abgeleitet ist. In einem zweiten Schritt wird die Knoten-Sendefrequenz basierend auf dem empfangenen Datenpaket und eine Abweichung des Frequenzgebers des Knotens basierend auf einer Frequenzabweichung zwischen der ermittelten Knoten-Sendefrequenz und einer dem Knoten zugeordneten Soll-Knoten-Sendefrequenz ermittelt. In einem dritten Schritt wird eine Basisstation-Sendefrequenz basierend auf der ermittelten Abweichung des Frequenzgebers des Knotens eingestellt und ein Datenpaket zu dem Knoten mit der Basisstation-Sendefrequenz gesendet.

Des Weiteren schaffen Ausführungsbeispiele der vorliegenden Erfindung ein Verfahren zur bidirektionalen Datenübertragung zwischen einer Basisstation und einem Knoten. In einem ersten Schritt wird ein von dem Knoten mit einer Knoten-Sendefrequenz gesendetes Datenpaket empfangen, wobei die Knoten-Sendefrequenz von einem Frequenzgeber des Knotens abgeleitet ist. In einem zweiten Schritt wird die Knoten-Sendefrequenz basierend auf dem empfangenen Datenpaket und eine Abweichung des Frequenzgebers des Knotens basierend auf einer Frequenzabweichung zwischen der ermittelten Knoten-Sendefrequenz und einer dem Knoten zugeordneten Soll-Knoten-Sendefrequenz ermittelt. In einem dritten Schritt wird ein Datenpaket zu dem Knoten gesendet, wobei das Datenpaket die ermittelte Abweichung des Frequenzgebers des Knotens oder einen davon abgeleiteten Korrekturwert aufweist.

Darüber hinaus schaffen Ausführungsbeispiele der vorliegenden Erfindung ein Verfahren zur bidirektionalen Datenübertragung zwischen einer Basisstation und einem Knoten. In einem ersten Schritt wird ein von dem Knoten zu einem Knoten-Sendezeitpunkt gesendetes Datenpaket empfangen, wobei der Knoten-Sendezeitpunkt von einem Zeitgeber des Knotens abgeleitet ist. In einem zweiten Schritt wird der Knoten-Sendezeitpunkt basierend auf dem empfangenen Datenpaket und eine Zeitabweichung des Zeitgebers des Knotens basierend auf einer Zeitabweichung zwischen dem ermittelten Knoten-Sendezeitpunkt und einem dem Knoten zugeordneten Soll-Knoten-Sendezeitpunkt ermittelt. In einem dritten Schritt wird ein Datenpaket zu dem Knoten gesendet, wobei das Datenpaket die ermittelte Zeitabweichung des Zeitgebers des Knotens oder einen davon abgeleiteten Korrekturwert aufweist.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eine Hardware-Apparats), wie zum Beispiel einen Mikroprozessor, einen programmierbaren Computer oder eine elektronische Schaltung. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Basisstation (100) mit bidirektionaler Datenübertragung zu einem Knoten (120), mit folgenden Merkmalen:
einer Einrichtung (102) zum Empfangen eines von dem Knoten (120) zu einem Knoten-Sendezeitpunkt gesendeten Datenpakets, wobei der Knoten-Sendezeitpunkt von einem Zeitgeber des Knotens (120) abgeleitet ist;
einer Einrichtung (104) zum Ermitteln des Knoten-Sendezeitpunktes basierend auf dem empfangenen Datenpaket und zum Ermitteln einer Zeitabweichung des Zeitgebers des Knotens (120) basierend auf einer Zeitabweichung zwischen dem ermittelten Knoten-Sendezeitpunkt und einem dem Knoten (120) zugeordneten Soll-Knoten-Sendezeitpunkt;
einer Einrichtung (106) zum Senden eines Datenpakets zu dem Knoten (120), wobei das Datenpaket die ermittelte Zeitabweichung des Zeitgebers des Knotens (120) oder einen davon abgeleiteten Korrekturwert aufweist;
wobei die Einrichtung (106) zum Senden des Datenpakets zu dem Knoten (120) ausgebildet ist, um das Datenpaket mit einem Basisstation-Sendezeitpunkt oder einem davon abgeleiteten Wert aufweisend zu dem Knoten (120) zur Synchronisation eines Knoten-Empfangszeitpunktes zu senden.

2. Basisstation (100) nach Anspruch 1, wobei die Einrichtung (102) zum Empfangen des von dem Knoten (120) zu dem Knoten-Sendezeitpunkt gesendeten Datenpakets ausgebildet ist, um ein von dem Knoten (120) zu einem weiteren Knoten-Sendezeitpunkt gesendetes weiteres Datenpaket zu empfangen, wobei der weitere Knoten-Sendezeitpunkt von dem Zeitgeber des Knotens (120) abgeleitet ist;
wobei die Einrichtung (104) zum Ermitteln des Knoten-Sendezeitpunktes ausgebildet ist, um den weiteren Knoten-Sendezeitpunkt basierend auf dem weiteren Datenpaket zu ermitteln, wobei die Einrichtung (104) zum Ermitteln der Zeitabweichung des Zeitgebers des Knotens (120) ausgebildet ist, um eine weitere Zeitabweichung zwischen dem ermittelten weiteren Knoten-Sendezeitpunkt und einem dem Knoten (120) zugeordneten weiteren Soll-Knoten-Sendezeitpunkt zu ermitteln, und um eine Taktabweichung des Zeitgebers des Knotens (120) basierend auf der Zeitabweichung und der weiteren Zeitabweichung zu ermitteln; und
wobei die Einrichtung (106) zum Senden des Datenpakets zu dem Knoten (120) ausgebildet ist, um das Datenpaket mit der ermittelten Taktabweichung des Zeitgebers oder einem davon abgeleiteten Korrekturwert aufweisend zu dem Knoten (120) zu senden.

3. Basisstation (100) nach einem der Ansprüche 1 bis 2, wobei die Basisstation (100) eine Einrichtung zum Koordinieren des Knotens (120) aufweist, die ausgebildet ist, um dem Knoten (120) den Soll-Knotensendezeitpunkt zuzuordnen.

4. Basisstation (100) nach Anspruch 3, wobei die Einrichtung (106) zum Senden des Datenpakets ausgebildet ist, um das Datenpaket zu einem Basisstation-Sendezeitpunkt zu senden, wobei die Einrichtung zum Koordinieren des Knotens (120) ausgebildet ist, um den Basisstation-Sendezeitpunkt keinem Knoten (120) als Soll-Knoten-Sendezeitpunkt zuzuordnen.

5. System (110) mit bidirektionaler Datenübertragung, mit folgenden Merkmalen:
einer Basisstation (100) nach einem der Ansprüche 1 bis 4; und
einem Knoten (120), wobei der Knoten (120) eine Einrichtung (122) zum Senden des Datenpakets zu der Basisstation (100) zu dem Knoten-Sendezeitpunkt und Einrichtung (124) zum Empfangen des Datenpakets von der Basisstation (100) aufweist, wobei die Einrichtung zum Senden des Datenpakets ausgebildet ist, um den Knoten-Sendezeitpunkt basierend auf der ermittelten Abweichung des Zeitgebers oder dem davon abgeleiteten Korrekturwert auf den Soll-Knoten-Sendezeitpunkt einzustellen.

6. Verfahren zur bidirektionalen Datenübertragung zwischen einer Basisstation und einem Knoten, mit folgenden Schritten:
Empfangen eines von dem Knoten zu einem Knoten-Sendezeitpunkt gesendeten Datenpakets, wobei der Knoten-Sendezeitpunkt von einem Zeitgeber des Knotens abgeleitet ist;
Ermitteln des Knoten-Sendezeitpunktes basierend auf dem empfangenen Datenpaket und Ermitteln einer Zeitabweichung des Zeitgebers des Knotens basierend auf einer Zeitabweichung zwischen dem ermittelten Knoten-Sendezeitpunkt und einem dem Knoten zugeordneten Soll-Knoten-Sendezeitpunkt;
Senden eines Datenpakets zu dem Knoten, wobei das Datenpaket die ermittelte Zeitabweichung des Zeitgebers des Knotens oder einen davon abgeleiteten Korrekturwert aufweist;
wobei beim Senden des Datenpakets zu dem Knoten das Datenpaket mit einem Basisstation-Sendezeitpunkt oder einem davon abgeleiteten Wert aufweisend zu dem Knoten zur Synchronisation eines Knoten-Empfangszeitpunktes gesendet wird.

7. Computerprogramm mit einem Programmcode zur Durchführung des Verfahrens nach Anspruch 6, wenn das Programm auf einem Computer oder Mikroprozessor abläuft.

## Claims

1. A base station (100) including bidirectional data transmission to a node (120), comprising:
means (102) for receiving a data packet transmitted by the node (120) at a node transmission time, the node transmission time being derived from a timer of the node (120);
means (104) for determining the node transmission time on the basis of the data packet received and for determining a time deviation of the timer of the node (120) on the basis of a time deviation between the determined node transmission time and a set node transmission time associated with the node (120);
means (106) for transmitting a data packet to the node (120), the data packet comprising the determined time deviation of the timer of the node (120) or a correction value derived therefrom;
wherein the means (106) for transmitting the data packet to the node (120) is configured to transmit the data packet to the node (120), for synchronization of a node receiving time, at a base station transmission time or comprising a value derived therefrom.

2. The base station (100) as claimed in claim 1, wherein the means (102) for receiving the data packet transmitted by the node (120) at the node transmission time is configured to receive a further data packet transmitted by the node (120) at a further node transmission time, the further node transmission time being derived from the timer of the node (120);
wherein the means (104) for determining the node transmission time is configured to determine the further node transmission time on the basis of the further data packet, the means (104) for determining the time deviation of the timer of the node (120) being configured to determine a further time deviation between the determined further node transmission time and a further set node transmission time associated with the node (120) and to determine a clock deviation of the timer of the node (120) on the basis of the time deviation and the further time deviation; and
wherein the means (106) for transmitting the data packet to the node (120) is configured to transmit the data packet to the node (120) at the determined clock deviation of the timer or comprising a correction value derived therefrom.

3. The base station (100) as claimed in any of claims 1 to 2, wherein the base station (100) comprises means for coordinating the node (120) which is configured to associate the set node transmission time with the node (120).

4. The base station (100) as claimed in claim 3, wherein the means (106) for transmitting the data packet is configured to transmit the data packet at a base station transmission time, the means for coordinating the node (120) being configured to not associate the base station transmission time with a node (120) as the set node transmission time.

5. A system (110) including bidirectional data transmission, comprising:
a base station (100) as claimed in any of claims 1 to 4; and
a node (120), the node (120) comprising means (122) for transmitting the data packet to the base station (100) at the node transmission time and means (124) for receiving the data packet from the base station (100), the means for transmitting the data packet being configured to set the node transmission time to the set node transmission time on the basis of the determined deviation of the timer or the correction value derived therefrom.

6. A method for bidirectional data transmission between a base station and a node, comprising:
receiving a data packet transmitted by the node at a node transmission time, the node transmission time being derived from a timer of the node;
determining the node transmission time on the basis of the data packet received and determining a time deviation of the timer of the node on the basis of a time deviation between the determined node transmission time and a set node transmission time associated with the node;
transmitting a data packet to the node, the data packet comprising the determined time deviation of the timer of the node and a correction value derived therefrom;
wherein transmitting the data packet to the node comprises transmitting the data packet to the node, for synchronization of a node receiving time, at a base station transmission time or comprising a value derived therefrom.

7. A computer program comprising a program code for performing the method as claimed in claim 6, when the program runs on a computer or microprocessor.

## Revendications

1. Station de base (100) à transmission de données bidirectionnelle vers un noeud (120), aux caractéristiques suivantes:
un moyen (102) destiné à recevoir un paquet de données envoyé par le nœud (120) à un moment d'envoi du noeud, le moment d'envoi du nœud étant dérivé d'un temporisateur du nœud (120);
un moyen (104) destiné à déterminer le moment d'envoi du nœud sur base du paquet de données reçu et à déterminer un écart de temps du temporisateur du nœud (120) sur base d'un écart de temps entre le moment d'envoi du nœud déterminé et un moment d'envoi de nœud de consigne associé au nœud (120);
un moyen (106) destiné à envoyer au nœud (120) un paquet de données, le paquet de données présentant l'écart de temps déterminé du temporisateur du nœud (120) ou une valeur de correction dérivée de ce dernier;
dans laquelle le moyen (106) destiné à envoyer le paquet de données vers le nœud (120) est conçu pour envoyer vers le nœud (120) le paquet de données à un moment d'envoi de la station de base ou présentant une valeur dérivée de ce dernier pour la synchronisation d'un moment de réception du nœud.

2. Station de base (100) selon la revendication 1, dans lequel le moyen (102) destiné à recevoir le paquet de données envoyé par le nœud (120) au moment d'envoi du nœud est conçu pour recevoir un autre paquet de données envoyé par le nœud (120) à un autre moment d'envoi du nœud, où l'autre moment d'envoi du nœud est dérivé du temporisateur du nœud (120);
dans laquelle le moyen (104) destiné à déterminer le moment d'envoi du nœud est conçu pour déterminer l'autre moment d'envoi du nœud sur base de l'autre paquet de données, dans laquelle le moyen (104) pour déterminer l'écart de temps du temporisateur du nœud (120) est conçu pour déterminer un autre écart de temps entre l'autre temps d'envoi du nœud déterminé et un autre temps d'envoi de nœud de consigne attribué au nœud (120), et pour déterminer un écart d'horloge du temporisateur du nœud (120) sur base de l'écart de temps et de l'autre écart de temps; et
dans laquelle le moyen (106) destiné à envoyer le paquet de données vers le nœud (120) est conçu pour envoyer le paquet de données avec l'écart d'horloge déterminé du temporisateur ou présentant une valeur de correction dérivée de ce dernier vers le nœud (120).

3. Station de base (100) selon l'une des revendications 1 à 2, dans laquelle la station de base (100) présente un moyen destiné à coordonner le nœud (120) qui est configuré pour attribuer au nœud (120) le moment d'envoi de nœud de consigne.

4. Station de base (100) selon la revendication 3, dans laquelle le moyen (106) destiné à envoyer le paquet de données est conçu pour envoyer le paquet de données à un moment d'envoi de la station de base, dans laquelle le moyen destiné à coordonner le nœud (120) est conçu pour ne pas attribuer le moment d'envoi de la station de base à un nœud (120) comme moment d'envoi de nœud de consigne.

5. Système (110) à transmission de données bidirectionnelle, aux caractéristiques suivantes:
une station de base (100) selon l'une des revendications 1 à 4; et
un nœud (120), où le nœud (120) présente un moyen (122) destiné à envoyer le paquet de données à la station de base (100) au moment d'envoi du nœud et un moyen (124) destiné à recevoir le paquet de données de la station de base (100), où le moyen destiné à envoyer le paquet de données est conçu pour régler le moment d'envoi du nœud, sur base de l'écart déterminé du temporisateur ou de la valeur de correction de ce dernier, au moment d'envoi de nœud de consigne.

6. Procédé de transmission de données bidirectionnelle entre une station de base et un nœud, aux étapes suivantes consistant à:
recevoir un paquet de données envoyé par le nœud à un moment d'envoi du nœud, où le moment d'envoi du nœud est dérivé d'un temporisateur du nœud;
déterminer le moment d'envoi du nœud sur base du paquet de données reçu et déterminer un écart de temps du temporisateur du nœud sur base d'un écart de temps entre le moment d'envoi de nœud déterminé et un moment d'envoi de nœud de consigne attribué au nœud;
envoyer un paquet de données au nœud, où le paquet de données présente l'écart de temps déterminé du temporisateur du nœud ou une valeur de correction dérivée de ce dernier;
dans lequel, lors de l'envoi du paquet de données au nœud, le paquet de données est envoyé à un moment d'envoi de la station de base ou présentant une valeur dérivée de ce dernier au nœud pour la synchronisation d'un moment de réception du nœud.

7. Programme d'ordinateur avec un code de programme pour la mise en œuvre du procédé selon la revendication 6 lorsque le programme est exécuté sur un ordinateur ou un microprocesseur.
